(19) **Europäisches Patentamt**

**European Patent Office**

**Office européen des brevets**

(11) **EP 1 096 057 B1**

(12) **EUROPEAN PATENT SPECIFICATION**

(45) Date of publication and mention
of the grant of the patent:
**08.03.2006 Bulletin 2006/10**

(51) Int Cl.:
*D06M 15/37* *(2006.01)*      *D06M 15/41* *(2006.01)*
*D04H 1/42* *(2006.01)*      *B01D 39/16* *(2006.01)*

(21) Application number: **00123002.8**

(22) Date of filing: **23.10.2000**

(54) **Heat resistant fabric and filter composed thereof**

Hitzebeständiges Material und daraus hergestellter Filter

Tissu résistant à la chaleur et filtre composé de cela

(84) Designated Contracting States:
**DE FR GB**

(30) Priority: **28.10.1999 JP 30677699**

(43) Date of publication of application:
**02.05.2001 Bulletin 2001/18**

(73) Proprietor: **TORAY INDUSTRIES, INC.**
**Tokyo 103-8666 (JP)**

(72) Inventors:
• **Nakahara, Makoto**
**Kosei-center, Shiga Plant**

**Otsu-shi,**
**Shiga 520-8558 (JP)**
• **Okazaki, Osamu**
**Mishima-gun,**
**Osaka 618-0001 (JP)**

(74) Representative: **Hager, Thomas Johannes**
**Hoefer & Partner**
**Patentanwälte**
**Gabriel-Max-Strasse 29**
**81545 München (DE)**

(56) References cited:
FR-A- 2 584 942      US-A- 4 917 714
US-A- 6 103 643

• PATENT ABSTRACTS OF JAPAN vol. 014, no. 211 (C-0715), 2 May 1990 (1990-05-02) & JP 02 047389 A (TEIJIN LTD), 16 February 1990 (1990-02-16)
• PATENT ABSTRACTS OF JAPAN vol. 016, no. 259 (E-1215), 11 June 1992 (1992-06-11) & JP 04 058508 A (NIPPON CHEMICON CORP), 25 February 1992 (1992-02-25)
• PATENT ABSTRACTS OF JAPAN vol. 1998, no. 11, 30 September 1998 (1998-09-30) & JP 10 174822 A (CHISSO CORP), 30 June 1998 (1998-06-30)

**Description**

Background of the Invention

Field of the Invention

This invention relates to a heat resistant fabric used in filters for collecting dust in exhaust gases having a high temperature emitted from municipal refuse incinerators, coal boilers, metal melting furnaces, etc., and a filter composed thereof.

Description of the Prior Art

As filters for collecting dust emitted from municipal refuse incinerators, coal boilers, metal melting furnaces, etc., bag filters are well known. Filter cloths used in these bag filters are required to be resistant against heat when temperatures of the exhaust gases are as high as from about 130 to about 250°C. Furthermore, to keep high filtration efficiencies in such high temperature atmospheres, it is required that a filtration area in a limited space is as large as possible.

The filter cloths for bag filters used at such high temperatures include felt obtained by laminating a ground fabric and a web, and entangling the web and the ground fabric by a needle punch or jet water current, etc.

However, the conventional bag filters composed of filter cloths for bag filters are made by sewing filter cloths into cylindrical forms and have a problem that since the filter cloth area is small, that is, since the filtration area is small, the bag house per se must be larger to achieve a higher filtration efficiency. To solve the problem, pleated filters in which the filter cloths are pleated to secure filtration areas as large as possible in small bag houses are used increasingly in recent years.

In JP 11-158776 A, a nonwoven fabric composed of polyphenylene sulfide fibers and impregnated with a synthetic resin for use as a more rigid filter cloth to be formed into a pleated filter is proposed. However, though the filter cloth in this filter shows a high rigidity at room temperature, it has such problems that if it is used at high temperatures, the filter cloth itself is softened in accordance with softening of the polyphenylene sulfide fibers, and it brings deformation of figures of the pleats, and further that adhesion of adjacent pleats each other and decreasing of effective filtration area are brought by a pressure acting on the filter during filtration of exhaust gas. This situation brings a problem of sudden raising of pressure loss of the filter.

JP 2052116, JP 2594844 and JP 2602116, JP 01-274813 A, JP 02-047389 A, JP 03-137259 A, JP 03-137260 A and JP 06-248546 A, and PCT International Publication in Japanese Translation No. 10-506963 propose nonwoven fabrics comprising many kinds of fibers including polyphenylene sulfide fibers. However, though these nonwoven fabrics have sufficient durability of fibers at high temperatures, they are low in rigidity at room temperature as well as high temperatures and cannot hold a form of pleat, since the fibers have less bound each other and are not constrained by each other.

JP 2594726 proposes a nonwoven fabric, in which heat resistant fibers are bonded by a thermoplastic resin and in which the density of fibers is graded in the normal direction from the bottom layer to the top layer. However, since the nonwoven fabric has a density gradient of fibers from one surface to the other surface, it cannot have a sufficient rigidity required for a nonwoven fabric.

JP 2559872 proposes a nonwoven fabric consisting of heat resistant fibers and polyphenylene sulfide fibers, in which the molten lumps of the polyphenylene sulfide fibers bond the fibers each other. The nonwoven fabric has a problem that pleats are deformed when it is used at a temperature higher than 130°C, since the rigidity of the nonwoven fabric declines because of the polyphenylene sulfide used for bonding the fibers each other.

US - 6 103 643 and FR 25 84 942 disclose a heat resistant fabric according to the preamble part of claim 1.

Summary of the Invention

The conventional filter cloths discussed in the above have disadvantages, when they are used to form pleated filters and used in a high temperature, such that the filter cloths are softened and a formation of pleat is deformed and further a pressure loss of the filter shows sudden raising.

The object of the present invention is to overcome the disadvantages of the prior art, and is to provide a heat resistant fabric excellent in shape maintenance at high temperatures even if it is used as a filter cloth for filters used at high temperatures, particularly a heat resistant fabric excellent in the shape maintenance of pleats at high temperatures even if it is used as a filter cloth for pleated filters used at high temperatures. Furthermore, the present invention provides a filter using the beat resistant fabric as a filter medium therein.

This object is solved by a heat resistant fabric having the features of claim. The subclaims contain preferred emdodiments of the invention.

A heat resistant fabric according to the present invention comprises a nonwoven fabric formed by polyphenylene sulfide fibers and mixing fibers having a glass transition temperature of not less than 100°C or having no glass transition temperature, and the fibers of the nonwoven fabric are constrained at the intersections thereof by a synthetic resin. The amount of the mixing fibers based on the weight of the nonwoven fabric is in the range from 5 to 90 wt%. A more preferable range is in the range from 10 to 60 wt%.

The heat resistant fabric of the present invention is remarkably improved in shape holding property or retention property of configuration at a high temperature, compared with the fabric comprising a nonwoven fabric formed with only polyphenylene sulfide fibers impregnated with a synthetic resin.

It is preferable that the mixing fibers in the present invention are at least one kind of fibers selected from a group consisting of inorganic fibers, full aromatic polyamide fibers, fluorine fibers and full aromatic polyester fibers.

It is preferable that the inorganic fibers are glass fibers or carbon fibers. It is preferable that the full aromatic polyamide fibers are para-aramid fibers or meta-aramid fibers. It is preferable that the fluorine fibers are polytetrafluoroethylene fibers.

It is preferable that the amount of the synthetic resin based on the weight of the nonwoven fabric is in the range from 5 to 70 wt%.

It is preferable that the viscosity of the synthetic resin is in the range from 50 to 700 mPa · s. It is preferable that the glass transition temperature of the synthetic resin is not less than 100°C.

It is preferable that the synthetic resin is a thermosetting resin. It is preferable that the thermosetting resin is at least one resin selected from a group consisting of epoxy resins, acrylic resins, melamine resins, phenol resins, vinyl ester resins and unsaturated polyester resins.

It is preferable that a hanging down length of the heat resistant fabric is not more than 20 mm.

It is preferable that a stiffness of the heat resistant fabric is not less than 49.0 mN (5,000 mgf).

It is preferable that a density of the intermediate layer of the three layers identified by dividing the heat resistant fabric into three equally thick layers in the normal direction is lower than the density of the surface layers.

It is preferable that a single fiber fineness of the polyphenylene sulfide fibers is in the range from 0.11 to 16.7 decitexes (from 0.1 to 15 deniers). It is preferable that the fiber length of the polyphenylene sulfide fibers is in the range from 2 to 100 mm.

It is preferable that a fineness of the mixed fibers is in the range from 0.33 to 33 decitexes (from 0.3 to 30 deniers).

It is preferable that the heat resistant fabric has a microporous membrane on a surface thereof to have dust deposited.

Brief Description of the Drawing

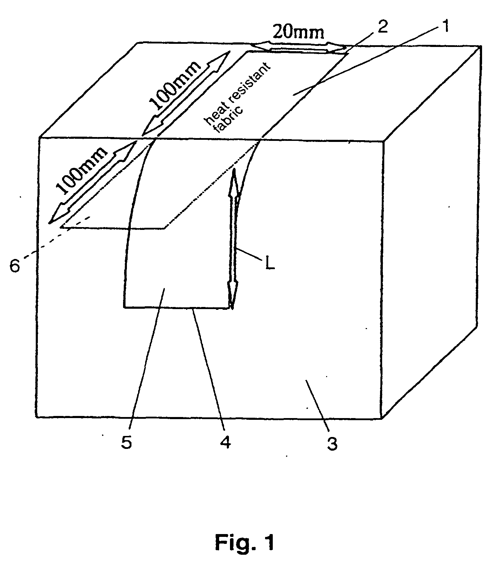

Fig. 1 is a perspective view for illustrating the means for measuring a hanging down length of the heat resistant fabric of the present invention.

Description of the Preferred Embodiments

The basic constitution of the heat resistant fabric according to the present invention consists of fibers having a glass transition temperature of 100°C or higher or having no glass transition temperature, polyphenylene sulfide fibers and a synthetic resin.

It is important that the heat resistant fabric comprises a nonwoven fabric formed with polyphenylene sulfide fibers mixed with fibers i.e. mixing fibers having a glass transition temperature of 100°C or higher or having no glass transition temperature. The mixing fibers existing in the nonwoven fabric enhance the shape holding property of pleat formed in the fabric at a high temperature of not less than 130°C when the nonwoven fabric is used to form a pleated filter medium.

It is preferable that the mixing fibers are inorganic fibers, full aromatic polyamide fibers, fluorine fibers or full aromatic polyester fibers. Among them, glass fibers, carbon fibers, para-aramid fibers, meta-aramid fibers or polytetrafluoroethylene fibers respectively excellent in heat resistance and chemicals resistance are preferable. Furthermore among them, glass fibers or para-aramid fibers are especially preferable.

In the heat resistant fabric of the present invention, a synthetic resin used for constraining intersections between the fibers in the nonwoven fabric is, for example, impregnated into the nonwoven fabric. After completion of impregnation, the nonwoven fabric is dried to remove water deposited due to impregnation. Then, the nonwoven fabric is cured. The curing treatment cures the synthetic resin deposited in the nonwoven fabric. Thus, the obtained nonwoven fabric has a high rigidity.

It is preferable that the amount of the deposited synthetic resin after drying is in the range from 5 to 70 wt% based on the total weight of the nonwoven fabric. If the deposited amount is less than 5 wt%, the rigidity of the heat resistant fabric is too low, and it may be difficult to maintain the shape of pleats when the fabric is used as a filter. If the deposited amount is more than 70 wt%, the voids of the heat resistant fabric become small, and the pressure loss may be too high when the fabric is used as a filter.

The viscosity of the synthetic resin is measured using a Brookfield viscometer according to JIS K 7117. It is preferable that the viscosity of the synthetic resin is in the range from 50 to 700 mPa · S.

If the viscosity of the synthetic resin is less than 50 mPa · S, the amount of the synthetic resin deposited in the nonwoven fabric becomes too small, and the rigidity of the heat resistant fabric becomes too low. If the viscosity of the synthetic resin is more than 700 mPa · S, the amount of the synthetic resin deposited in the nonwoven fabric becomes too large, and the voids of the heat resistant fabric become so small as to cause the pressure loss to be higher when the fabric is used as a filter.

Where the viscosity of the synthetic resin is 50 to 700 mPa · S, the synthetic resin mixture solution can migrate mainly into the intersections between the fibers of the nonwoven fabric when the nonwoven fabric is dried and cured. Thus, a heat resistant fabric having fibers constrained by each other, enhanced in rigidity and small in pressure loss can be obtained.

The polyphenylene sulfide fibers used in the present invention are fibers made of a polymer, 90% or more of the structural components is a phenylene sulfide structural component represented by $(C_6H_4\text{-}S)\text{-}$.

The significance of using polyphenylene sulfide fibers is as follows.

Polyphenylene sulfide fibers are known as fibers having excellent heat resistance, vapor heat resistance, chemicals resistance, and physical properties such as strength. However, the glass transition temperature of polyphenylene sulfide fibers is 90°C which is not more than 100°C, and is unsatisfactory for holding configuration pleats formed in the fabric at high temperatures of not less than 130°C.

It was found by the inventors, that where the polyphenylene sulfide fibers and fibers i.e. mixing fibers having a transition temperature of not less than 100°C or having no glass transition temperature are mixed, and the fibers in the obtained fabric are impregnated with a synthetic resin, a heat resistant fabric thus obtained shows excellent in vapor heat resistance and chemicals resistance, long in the service life as a filter, and also high in rigidity at high temperatures when used in a pleated filter.

It is preferable that the content of the mixing fibers used in the present invention, that is, the fibers having a glass transition temperature of not less than 100°C or having no glass transition temperature is in the range from 5 to 90 wt%. A more preferable the range is from 10 to 60 wt%. If the mixing fibers content is less than 5 wt%, the rigidity of the fabric at high temperatures is too low, and if the mixing fibers content is more than 90 wt%, the strength, chemicals resistance and vapor heat resistance of the fabric become too low unpreferably, though the rigidity of the fabric at high temperatures is high.

It is preferable that the synthetic resin used in the present invention has a glass transition temperature of not less than 100°C. Further, for obtaining excellent rigidity at high temperatures, it is preferable that the synthetic resin is a thermosetting resin, and in order to let the fabric have excellent rigidity at high temperatures of not less than 130°C, it is preferable that the synthetic resin is one or more thermosetting resins selected from a group consisting of epoxy resins, acrylic resins, melamine resins, phenol resins, vinyl ester resins and unsaturated polyester resins.

It is preferable that a hanging down length at 170°C as an indicator of the rigidity of the heat resistant fabric of the present invention at a high temperature is not more than 20 mm. If the hanging down length is larger than 20 mm, the rigidity at a high temperature is too low, and the shape holding property of pleat at a high temperature becomes poor. The hanging down length is measured as follows.

From a heat resistant fabric to be measured a hanging down length, a fabric having 200 mm long and 20 mm wide is cut off as a test piece. As shown with Fig. 1, the thus obtained test piece 1 is fixed on the surface of a rectangular test-piece-mounting block 3 in a portion of 100 mm from one end 2 of the test piece 1, using a mechanical means or adhesive. In this case, the other end 4 of the test piece 1 is protruded from the block 3.

The block 3 mounted with the test piece 1 is allowed to stand in a 170°C atmosphere for 1 hour. During this period, the portion 5 of the test piece 1 protruding from the block 3 is softened to hang down. In this state, the length L in the vertical direction from the position of the end 4 of the test piece 1 to the plane 6 (shown by a dotted line in Fig. 1) containing the upper surface of the block 3 is measured. Thus measured length L is a hanging down length. With reference to the hanging down length, a rigidity of the fabric at a high temperature, i.e., a shape holding property of pleat at a high temperature can be evaluated.

The hanging down length has important meaning especially on the case that the heat resistant fabric is processed to a fabric having pleats. It is preferable that on such fabric having pleats, a test piece for measuring the hanging down length which is obtained by cutting from the fabric in coincident with the length direction of the test piece and the direction of folding line of the pleat with the dimension defined above shows a hanging down length of not more than 20 mm.

The inventors found that the rigidity of a heat resistant fabric in the standard conditions (at temperature of 20°C and pressure of atmospheric pressure) necessary for obtaining a high rigidity at a high temperature can be evaluated in reference to a stiffness measured based on the Gueley method specified in JIS L 1096.

It is preferable that a stiffness of the heat resistant fabric is not less than 49 mN (5,000 mgf). If the stiffness is less than 49 mN (5,000 mgf), the shape holding property of pleat at a high temperature becomes poor.

It is preferable that a single fiber fineness of the polyphenylene sulfide fibers used in the present invention is in the range from 0.11 to 16.7 decitexes (0.1 to 15 deniers). If the single fiber fineness is less than 0.11 decitex (0.1 denier), fibers are broken during a carding and/or needle punching of the fibers and it brings lowering the strength of the heat resistant fabric. If the single fiber fineness is more than 16.7 decitexes (15 deniers), the surface area of the fibers becomes small and it brings lowering dust collection performance.

It is preferable that the single fiber fineness of the fibers having a glass transition temperature of 100°C or higher or having no glass transition temperature, i.e., the mixing fibers is in the range of from 0.33 to 33 decitexes (from 0.3 to 30 deniers). If the single fiber fineness is less than 0.33 decitex (0.3 denier), the rigidity per fiber is too low, and the rigidity of the heat resistant fabric becomes too low. If the single fiber fineness is more than 33 decitexes (30 deniers), the stability in carding process becomes low, and the entangling achieved by needle punching becomes poor and it brings lowering the strength of the heat resistant fabric.

It is preferable that a fiber length of the polyphenylene sulfide fibers used in the present invention is in the range from 2 to 100 mm. If the fiber length is less than 2 mm, the mutual entangling of fibers is insufficient and it brings lowering the strength of the heat resistant fabric. If the fiber length is more than 100 mm, the fibers may be entangled during carding to form pills, etc.

The nonwoven fabric used to form the heat resistant fabric of the present invention can be produced by a method and apparatus for producing a publicly known nonwoven fabric such as a needle punched nonwoven fabric, wet nonwoven fabric, spun lace nonwoven fabric, spun bond nonwoven fabric, melt blow nonwoven fabric, resin bond nonwoven fabric, chemical bond nonwoven fabric, thermal bond nonwoven fabric, tow opened nonwoven fabric or air laid nonwoven fabric. For using the nonwoven fabric as a filter medium for a pleated filter, among the above methods, a method for producing a needle punched nonwoven fabric or spun lace nonwoven fabric is preferable in view of the rigidity and tensile strength of the filter medium.

The heat resistant fabric of the present invention is used as a filter medium for a pleated filter, it is necessary that an areal unit weight of the heat resistant fabric is in the range from 150 to 600 g/m². If the areal unit weight is less than 150 g/m², the rigidity of the heat resistant fabric becomes too low. If the areal unit weight is more than 600 g/m², the thickness is too large, and when the fabric is folded into pleats, the adjacent pleats are bonded to each other, to raise the pressure loss at the time of exhaust gas filtration.

It is preferable that a tensile strength of the heat resistant fabric of the present invention is not less than 49 N/50 mm (5 kgf/50 mm). If the tensile strength is less than 49 N/50 mm (5 kgf/50 mm), it can happen that the pressure acting during exhaust gas filtration or the pressure acting during the backwash of pulse jet, etc. may cause the filter medium to be damaged.

A preferable method for producing the heat resistant fabric of the present invention is as follows.

To produce the heat resistant fabric of the present invention, short polyphenylene sulfide fibers and short fibers having a glass transition temperature of 100°C or higher or having no glass transition temperature which is mixing fibers are mixed and opened using an ordinary carding machine, and the obtained fleeces are laminated and needle-punched for entangling the fibers. A nonwoven fabric is obtained by the entangling treatment. In this case, it is preferable that the amount of the mixing fibers is in the range from 5 to 90 wt%. A more preferable range is from 10 to 60 wt%.

The obtained nonwoven fabric is thermally pressed using a hot press or heated roller calender, etc. at a temperature of in the range from 100 to 280°C, at a linear pressure of in the range from 98 to 6860 N/cm (10 to 700 kgf/cm) and at a clearance of in the range from 0 to 1 mm. A thickness of the nonwoven fabric is adjusted by the thermal press treatment. A compactness of fibers existing in a surface layer of the nonwoven fabric is obtained by the thermal press treatment.

As for forming a density difference of the nonwoven fabric in the thickness direction, it is preferable that the ratio of the density A of the two surface layers obtained by slicing the nonwoven fabric in the planes parallel to the surfaces into three equal layers in the thickness direction, to the density B of the intermediate layer is in the range of from 1.1 to 2.5. It is preferable that the density difference in the thickness direction satisfies the following formula.

$$A/B = 1.1 - 2.5$$

From this, a heat resistant fabric having a highly rigid structure, for example, like a corrugated fiberboard can be obtained. A heat resistant fabric having excellent dust removing capability also can be obtained.

The thermal press treatment is not especially limited in the means, and any means that can thermally press the surfaces of the nonwoven fabric can be used. The surfaces of the rolls, etc. to be brought into contact with the nonwoven fabric may be flat or have projections and depressions.

The obtained nonwoven fabric is impregnated with a synthetic resin having a viscosity of in the range from 50 to 700 mPa · S by using a dip mangle. The nonwoven fabric impregnated with a synthetic resin is treated by a tenter at a temperature in the range from 120 to 300°C, and the impregnated synthetic resin is dried and cured. Thus, a desired heat resistant fabric can be produced.

In the synthetic resin impregnation process, it is preferable that the amount of the synthetic resin deposited after drying the synthetic resin based on the weight of the nonwoven fabric not impregnated with the synthetic resin is in the range from 10 to 60 wt%, for obtaining a heat resistant fabric with both high rigidity and low pressure loss satisfied simultaneously.

As main applications than the above, the heat resistant fabric can also be used as an ordinary cylindrically sewn filter without pleats for filtering an exhaust gas, etc., or as a liquid filter for filtering a liquid, etc.

If a microporous membrane is stuck onto the surface of the heat resistant fabric, it can be a heat resistant fabric with higher dust collection performance if it is used as a filter, or also a heat resistant fabric excellent in dust removing capability when dust is removed from the fabric by pulse jet. The microporous membrane used is not especially limited, and, for example, a publicly known fluorine based microporous membrane can be used. The above-mentioned surface of the heat sensitive fabric refers to the surface on the side to have dust deposited when it is used as a filter.

Examples

The densities of the synthetic resins used in the examples, and the hanging down lengths, stiffness values, tensile breaking strengths and the shape holding properties of pleats at high temperatures of the heat resistant fabrics produced in the examples and comparative examples were measured according to the methods described below.

Viscosity of synthetic resin:

It was measured by using a Brookfield viscometer produced by K.K. Tokyo Keiki under the method described in JIS K 7117 Viscosity Testing Methods of Liquid Resins Using Rotational Viscometers .

Hanging down length of heat resistant fabric:

As described in the above.

Stiffness of heat resistant fabric:

It was measured by the Gurley method described in JIS L 1096A with a test piece having a length of 50.8 mm and a width of 25.4 mm taken out from a heat resistant fabric.

Tensile breaking strength of heat resistant fabric:

A test piece having a length of 200 mm and a width of 50 mm was prepared by taking out from a heat resistant fabric. When in a heat resistant fabric the fibers therein were positioned relatively in one direction, the longitudinal direction of the test piece was coincided with the direction of the fibers in the fabric. The tensile breaking strength was measured by using the test piece under a Tensilon tensile tester with a grip interval of 100 mm and a tensile speed of 100 mm/min.

Shape holding property of pleats of heat resistant fabric at a high temperature:

A heat resistant fabric was pleated with a pitch of 3 cm and a crest height of 5 cm. When the fibers in the fabric were arranged relatively in one direction, the folding lines of pleats were taken perpendicular to the direction of the fibers. The pleated heat resistant fabric was fixed in an iron frame and hot air having temperature of 170°C and speed of 3 m/min was passed through the fabric. A filtration air velocity was obtained by dividing the flow rate ($m^3$/s) of hot air by the filtration area (the total area of the heat resistant fabric obtained by unfolding the pleats) ($m^2$).

The shape holding property of pleats at a high temperature was evaluated according to the following criterion in reference to the condition of the pleated filter cloth observed during said air feed.

E: Good without deformation of triangles of pleat sections
G: Triangles of pleat sections were rather deformed.
B: Triangles of pleat sections were greatly deformed.

Example 1

Short polyphenylene sulfide fibers (Torcon produced by Toray Industries, Inc.) having a single fiber fineness of 2.0 deniers and a fiber length of 51 mm and glass fibers (E glass produced by Unitika Glass Fibers K.K.) having a fiber diameter of 5 $\mu$ m and a fiber length of 75 mm were mixed with a ratio by weight of 85:15, and carded to form a web, and the obtained webs were laminated. The laminated web was needle-punched to obtain a nonwoven fabric.

The obtained nonwoven fabric was heat-treated by using a calender roll having a temperature of 190°C, a linear pressure of 2,940 N (300 kgf/cm) and a clearance of 0 mm, to obtain a nonwoven fabric having a thickness of 1.2 mm. The nonwoven fabric was impregnated with a synthetic resin (viscosity 224 mPa · s) prepared by mixing an acrylic resin (Boncoat EXPM1119 produced by Dainippon Ink & Chemicals, Inc., viscosity 320 mPa · s), a melamine resin (Beccamine APM produced by Dainippon Ink & Chemicals, Inc., viscosity 6240 mPa · s) and tap water (viscosity 1.0 mPa · s).

The nonwoven fabric impregnated with the synthetic resin was mangled by a mangle so that the weight of the mangled fabric became 120% of the weight of the nonwoven fabric before the impregnation of the resin, and dried by a tenter at 220°C for 3 minutes. Thus, a heat resistant fabric having a weight of 381 g/m$^2$, a thickness of 1.51 mm and a rate of deposition of the synthetic resin after drying to the nonwoven fabric before the impregnation of the resin being 32 % was obtained.

Example 2

A 1.48 mm thick heat resistant fabric with an areal unit weight of 375 g/m$^2$ with the synthetic resin deposited by 29% (after drying) based on the weight of the nonwoven fabric not yet impregnated with the synthetic resin was obtained as described for Example 1, except that short polyphenylene sulfide fibers (Torcon produced by Toray Industries, Inc.) with a single fiber fineness of 2.0 deniers and a fiber length of 51 mm and glass fibers (E glass produced by Unitika Glass Fibers K.K.) with a fiber diameter of 5 $\mu$ m and a fiber length of 75 mm were mixed at a ratio by weight of 50:50.

Example 3

A 1.44 mm thick heat resistant fabric with an areal unit weight of 370 g/m$^2$ with the synthetic resin deposited by 30% (after drying) based on the weight of the nonwoven fabric not yet impregnated with the synthetic resin was obtained as described for Example 1, except that short polyphenylene sulfide fibers (Torcon produced by Toray Industries, Inc.) with a single fiber fineness of 2.0 deniers and a fiber length of 51 mm and para-aramid fibers (Kevler produced by Toray Du Pont K.K.) with a single fiber fineness of 1.5 deniers and a fiber length of 51 mm were mixed at a ratio by weight of 85:15.

Example 4

A 1.41 mm thick heat resistant fabric with an areal unit weight of 380 g/m$^2$ with the synthetic resin deposited by 27% (after drying) based on the weight of the nonwoven fabric not yet impregnated with the synthetic resin was obtained as described for Example 1, except that a phenol resin (Phenolite TD-4304 produced by Dainippon Ink & Chemicals, Inc., viscosity 870 mPa · s) was used instead as the synthetic resin.

Comparative Example 1

Short polyphenylene sulfide fibers (Torcon produced by Toray Industries, Inc.) with a single fiber fineness of 2.0 deniers and a fiber length of 51 mm were carded to form a web, and the web was laminated with webs produced similarly. The laminate was needle-punched to obtain a nonwoven fabric. The obtained nonwoven fabric was heat-treated by a calender roll at a temperature of 190°C at a linear pressure of 2940 N (300. kgf/cm) at a clearance of 0 mm, to prepare a 1.2 mm thick nonwoven fabric. The nonwoven fabric was impregnated with a synthetic resin (viscosity 224 mPa · s) obtained by mixing an acrylic resin (Boncoat EXPM1119 produced by Dainippon Ink & Chemicals, Inc., viscosity 320 mPa · s), a melamine resin (Beccamine APM produced by Dainippon Ink & Chemicals, Inc., viscosity 6240 mPa · s) and tap water (viscosity 1.0 mPa · s) at 25:25:50. The nonwoven fabric impregnated with the synthetic resin was mangled by a mangle to ensure that the weight became 120% of the weight of the nonwoven fabric not yet impregnated, and dried by a tenter at 220°C for 3 minutes, to obtain a 1.50 mm thick heat resistant fabric with an areal unit weight of 384 g/m$^2$ with the synthetic resin deposited by 34% (after drying) based on the weight of the nonwoven fabric not yet impregnated with the synthetic resin.

Comparative Example 2

A 1.56 mm thick heat resistant fabric with an areal unit weight of 383 g/m$^2$ with the synthetic resin deposited by 33% (after drying) based on the weight of the nonwoven fabric not yet impregnated with the synthetic resin was obtained as described for Example 1, except that short polyphenylene sulfide fibers (Torcon produced by Toray Industries, Inc.) with a single fiber fineness of 2.0 deniers and a fiber length of 51 mm and glass fibers (E glass produced by Unitika Glass Fibers K.K.) with a fiber diameter of 5 μ m and a fiber length of 75 mm were mixed at a ratio by weight of 96:4.

Comparative Example 3

A 1.52 mm thick heat resistant fabric with an areal unit weight of 380.1 g/m$^2$ with the synthetic resin deposited by 32% (after drying) based on the nonwoven fabric not yet impregnated with the synthetic resin was obtained as described for Example 1, except that short polyphenylene sulfide fibers (Torcon produced by Toray Industries, Inc.) with a single fiber fineness of 2.0 deniers and a fiber length of 51 mm and glass fibers (E glass produced by Unitika Glass Fibers K.K.) with a fiber diameter of 5 μm and a fiber length of 75 mm were mixed at a ratio by weight of 8:92.

The property values of the heat resistant fabrics obtained in Examples 1 through 4 and Comparative Examples 1 through 3 are shown in Table 1. In Table 1, PPS means polyphenylene sulfide, and Kevler means para-aramid fibers (Kevler produced by Toray Du Pont K.K.).

## Table 1

|  | Example 1 | Example 2 | Example 3 | Example 4 |
|---|---|---|---|---|
| Mixing fibers used | Glass | Glass | Kevler | Glass |
| PPS fibers/ mixing fibers ratio(%) | 85/15 | 50/50 | 85/15 | 85/15 |
| Synthetic resins used | a: Acrylic b: Melamine | a: Acrylic b: Melamine | a: Acrylic b: Melamine | Phenol - |
| a/b synthetic resins ratio(%) | 50/50 | 50/50 | 50/50 | 100/0 |
| Hanging down length (mm) | 12.0 | 4.0 | 17.5 | 5.0 |
| Stiffness (mg) (mN) | 10,248 100.4 | 11,927 116.9 | 11,646 114.6 | 12,265 120.2 |
| Tensile breaking strength (kgf/50mm) (N/50mm) | 51. 0 499.8 | 42. 9 420.4 | 56.8 556.6 | 50.3 492.9 |
| Shape holding property of pleats at a high temperature | E | E | E | E |

Table 1(Continued)

| | Comparative Example 1 | Comparative Example 2 | Comparative Example 3 |
|---|---|---|---|
| Mixing fibers used | - | Glass | Glass |
| PPS fibers/ mixing fibers ratio(%) | 100/0 | 96/4 | 8/92 |
| Synthetic resins used | a: Acrylic b: Melamine | a: Acrylic b: Melamine | a: Acrylic b: Melamine |
| a/b synthetic resins ratio(%) | 50/50 | 50/50 | 50/50 |
| Hanging down length (mm) | 65.1 | 53.2 | 2.8 |
| Stiffness (mg) (mN) | 5,017 49.2 | 5,827 57.1 | 12,268 120.2 |
| Tensile breaking strength (kgf/50mm) (N/50mm) | 58.6 574.3 | 55.3 541.9 | 3.9 38.2 |
| Shape holding property of pleats at a high temperature | B | G | E |

As can be seen from the data described in Table 1, the heat resistant fabrics of Examples 1 through 4 are short in the hanging length at 170°C, good in the shape maintenance of pleats at 170°C and high in tensile breaking strength.

The heat resistant fabrics of Examples 1 through 4 were used as pleated filters of dust collectors for collecting the exhaust gas of a coal boiler, and were found to be excellent in the shape maintenance of pleats at high temperatures.

**Claims**

1. A heat resistant fabric comprising a nonwoven fabric formed by polyphenylene sulfide fibers and mixing fibers having a glass transition temperature of not less than 100°C or having no glass transition temperature, wherein intersections of fibers in the nonwoven fabric are constrained with a synthetic resin, **characterized in that** an amount of the mixing fibers based on the weight of the nonwoven fabric is in the range from 5 to 90 wt% and the heat resistant fabric has a pleat formation and further an areal unit weight of the heat resistant fabric is in the range from 150 to 600 g/m².

2. The heat resistant fabric according to claim 1, wherein the mixing fibers are at least one kind of fibers selected from the group consisting of inorganic fibers, full aromatic polyamide fibers, fluorine fibers and full aromatic polyester fibers.

3. The heat resistant fabric according to claim 2, wherein the mixing fibers are at least one kind of fibers selected from the group consisting of glass fibers, carbon fibers, para-aramid fibers, meta-aramid fibers and polytetrafluoroethylene fibers.

**4.** The heat resistant fabric according to claim 1, wherein a deposition amount of the synthetic resin based on the weight of the nonwoven fabric is in the range from 5 to 70 wt%.

**5.** The heat resistant fabric according to claim 4, wherein a viscosity of the synthetic resin is in the range from 50 to 700 mPa · s.

**6.** The heat resistant fabric according to claim 5, wherein a glass transition temperature of the synthetic resin is not less than 100°C.

**7.** The heat resistant fabric according to claim 1, wherein the synthetic resin is a thermosetting resin.

**8.** The heat resistant fabric according to claim 7, wherein the thermosetting resin is at least one resin selected from the group consisting of epoxy resins, acrylic resins, melamine resins, phenol resins, vinyl ester resins and unsaturated polyester resins.

**9.** The heat resistant fabric according to claim 1, wherein the amount of the mixing fibers is in the range from 10 to 60 wt%.

**10.** The heat resistant fabric according to claim 1, wherein a hanging down length is not more than 20 mm.

**11.** The heat resistant fabric according to claim 1, wherein a stiffness of the heat resistant fabric is not less than 49.0 mN (5,000 mgf).

**12.** The heat resistant fabric according to claim 1, wherein a density of an intermediate layer obtained by dividing the fabric into three equal thickness layers in the thickness direction is lower than densities of the surface layers.

**13.** The heat resistant fabric according to claim 1, wherein a single fiber fineness of the polyphenylene sulfide fibers is in the range from 0.11 to 16.7 decitexes (from 0.1 to 15 deniers).

**14.** The heat resistant fabric according to claim 13, wherein a fineness of the mixing fibers is in the range from 0.33 to 33 decitexes (from 0.3 to 30 deniers).

**15.** The heat resistant fabric according to claiml3, wherein a fiber length of the polyphenylene sulfide fibers is in the range from 2 to 100 mm.

**16.** The heat resistant fabric according to claim 14, wherein a fiber length of the polyphenylene sulfide fibers is in the range from 2 to 100 mm.

**17.** The heat resistant fabric according to claim 1, wherein a microporous membrane exists on the surface of the side to have dust deposited.

**18.** A filter having a filtering material comprising the heat resistant fabric defined in any one of claims 1 through 17.

**Revendications**

**1.** Etoffe résistant à la chaleur comprenant une étoffe non tissée formée par des fibres de polyphénylène sulfide et des fibres de mélange ayant une température de transition vitreuse non inférieure à 100 °C ou n'ayant aucune température de transition vitreuse, dans laquelle les intersections de fibres dans l'étoffe non tissée sont contraintes avec une résine synthétique, **caractérisée en ce qu'**une quantité des fibres de mélange basée sur le poids de l'étoffe non tissée est dans la gamme de 5 à 90 % en poids et l'étoffe résistant à la chaleur a une formation de pli et en outre un poids surfacique unitaire de l'étoffe résistant à la chaleur est dans la gamme de 150 à 600 g/m$^2$.

**2.** Etoffe résistant à la chaleur selon la revendication 1, dans laquelle les fibres de mélange sont au moins un type de fibres choisies dans le groupe consistant en les fibres inorganiques, les fibres de polyamide pleinement aromatique, les fibres de fluor et les fibres de polyester pleinement aromatique.

**3.** Etoffe résistant à la chaleur selon la revendication 2, dans laquelle les fibres de mélange sont au moins un type de fibres choisies dans le groupe consistant en les fibres de verre; les fibres de carbone, les fibres de para-aramide, les fibres de méta-aramide et les fibres de poly(tétrafluoroéthylène).

**4.** Etoffe résistant à la chaleur selon la revendication 1, dans laquelle une quantité de dépôt de la résine synthétique basée sur le poids de l'étoffe non tissée est dans la gamme de 5 à 70 % en poids.

**5.** Etoffe résistant à la chaleur selon la revendication 4, dans laquelle une viscosité de la résine synthétique est dans la gamme de 50 à 700 mPa.s.

**6.** Etoffe résistant à la chaleur selon la revendication 5, dans laquelle une température de transition vitreuse de la résine synthétique est non inférieure à 100 °C.

**7.** Etoffe résistant à la chaleur selon la revendication 1, dans laquelle la résine synthétique est une résine thermodurcissable.

**8.** Etoffe résistant à la chaleur selon la revendication 7, dans laquelle la résine thermodurcissable est au moins une résine choisie dans le groupe consistant en les résines époxy, les résines acryliques, les résines de mélamine, les résines de phénol, les résines d'ester de vinyle et les résines polyester insaturé.

**9.** Etoffe résistant à la chaleur selon la revendication 1, dans laquelle la quantité des fibres de mélange est dans la gamme de 10 à 60 % en poids.

**10.** Etoffe résistant à la chaleur selon la revendication 1, dans laquelle une longueur de suspension est non supérieure à 20 mm.

**11.** Etoffe résistant à la chaleur selon la revendication 1, dans laquelle une rigidité de l'étoffe résistant à la chaleur est non inférieure à 49,0 mN (5 000 mgf).

**12.** Etoffe résistant à la chaleur selon la revendication 1, dans laquelle une densité d'une couche intermédiaire obtenue en divisant l'étoffe en trois couches d'épaisseur égale dans la direction d'épaisseur est inférieure aux densités des couches de surface.

**13.** Etoffe résistant à la chaleur selon la revendication 1, dans laquelle une finesse de monofibres des fibres de poly(sulfure de phénylène) est dans la gamme de 0,11 à 16,7 décitex (de 0,1 à 15 deniers).

**14.** Etoffe résistant à la chaleur selon la revendication 13, dans laquelle une finesse des fibres de mélange est dans la gamme de 0,33 à 33 décitex (de 0,3 à 30 deniers).

**15.** Etoffe résistant à la chaleur selon la revendication 13, dans laquelle une longueur de fibre des fibres de polyphénylène sulfide est dans la gamme de 2 à 100 mm.

**16.** Etoffe résistant à la chaleur selon la revendication 14, dans laquelle une longueur de fibre des fibres de polyphénylène sulfide est dans la gamme de 2 à 100 mm.

**17.** Etoffe résistant à la chaleur selon la revendication 1, dans laquelle une membrane microporeuse existe sur la surface du côté pour que la poussière se dépose.

**18.** Filtre comportant un matériau filtrant comprenant l'étoffe résistant à la chaleur définie dans l'une quelconque des revendications 1 à 17.

**Patentansprüche**

**1.** Hitzebeständiges Gewebe, umfassend ein nicht gewobenes Gewebe, gebildet aus Polyphenylen-Sulfid-Fasern und Mischfasern mit einer Glasübergangstemperatur von nicht weniger als 100°C oder ohne Glasübergangstemperatur; wobei Schnittpunkte von Fasern in dem nicht gewobenen Gewebe mit einem Kunstharz eingebunden sind, **dadurch gekennzeichnet, dass** eine Menge der Mischfasern auf der Grundlage des Gewichts des nicht gewobenen Gewebes in dem Bereich zwischen 5 und 90 Gew.% liegt und das hitzebeständige Gewebe eine Faltenbildung aufweist und ferner ein Bereichseinheitsgewicht des hitzebeständigen Gewebes in dem Bereich zwischen 150 und 600 g/m$^2$

liegt.

2. Hitzebeständiges Gewebe nach Anspruch 1, wobei die Mischfasern zumindest eine Art von Fasern, ausgewählt aus der Gruppe bestehend aus anorganischen Fasern, vollaromatischen Polyamidfasern, Fluorfasern und vollaromatischen Polyesterfasern, sind.

3. Hitzebeständiges Gewebe nach Anspruch 2, wobei die Mischfasern zumindest eine Art von Fasern, ausgewählt aus der Gruppe bestehend aus Glasfasern, Kohlenstofffasern, Paraaramidfasern, Metaaramidfasern und Polytetrafluoräthylenfasern, sind.

4. Hitzebeständiges Gewebe nach Anspruch 1, wobei eine Ablagerungsmenge des Kunstharzes auf der Grundlage des Gewichts des nicht gewobenen Gewebes in dem Bereich von 5 bis 70 Gew.% liegt.

5. Hitzebeständiges Gewebe nach Anspruch 4, wobei eine Viskosität des Kunstharzes in dem Bereich von 50 bis 700 mPa•s liegt.

6. Hitzebeständiges Gewebe nach Anspruch 5, wobei eine Glasübergangstemperatur des Kunstharzes nicht weniger als 100°C ist.

7. Hitzebeständiges Gewebe nach Anspruch 1, wobei das Kunstharz ein härtbares Kunstharz ist.

8. Hitzebeständiges Gewebe nach Anspruch 7, wobei das härtbare Kunstharz zumindest ein Harz, ausgewählt aus der Gruppe bestehend aus Epoxidharzen, Acrylharzen, Melaminharzen, Phenolharzen, Vinylesterharzen und ungesättigten Polyesterharzen, ist.

9. Hitzebeständiges Gewebe nach Anspruch 1, wobei die Menge der Mischfasern in dem Bereich zwischen 10 und 60 Gew.% liegt.

10. Hitzebeständiges Gewebe nach Anspruch 1, wobei eine Herabhängelänge nicht mehr als 20 mm beträgt.

11. Hitzebeständiges Gewebe nach Anspruch 1, wobei eine Formsteifigkeit des wärmebeständigen Gewebes nicht weniger als 49,0 mN (5000 mgf) beträgt.

12. Hitzebeständiges Gewebe nach Anspruch 1, wobei eine Dichte einer Zwischenschicht, erhalten durch Teilen des Gewebes in drei gleich dicke Schichten in der Richtung der Dicke, geringer ist als die Dichte der Oberflächenschichten.

13. Hitzebeständiges Gewebe nach Anspruch 1, wobei eine Einzelfaserfeinheit der Polyphenylensulfidfasern in dem Bereich zwischen 0,11 und 16,7 Decitex (von 0,1 bis 15 den) liegt.

14. Hitzebeständiges Gewebe nach Anspruch 13, wobei eine Feinheit der Mischfasern in dem Bereich zwischen 0,33 und 33 Decitex (zwischen 0,3 und 30 den) liegt.

15. Hitzebeständiges Gewebe nach Anspruch 13, wobei eine Faserlänge der Polyphenylensulfidfasern in dem Bereich zwischen 2 und 100 mm liegt.

16. Hitzebeständiges Gewebe nach Anspruch 14, wobei eine Faserlänge der Polyphenylensulfidfasern in dem Bereich zwischen 2 und 100 mm liegt.

17. Hitzebeständiges Gewebe nach Anspruch 1, wobei eine mikroporöse Membran auf der Oberfläche der Seite zur Ablagerung von Staub vorhanden ist.

18. Filter mit einem Filtermaterial umfassend das in einem der Ansprüche 1 bis 17 definierte hitzebeständige Gewebe.

**Fig. 1**